# EUROPEAN PATENT APPLICATION

(11) **EP 2 816 220 A2**
(43) Date of publication of application: **24.12.2014**
(21) Application number: 14172988.9
(22) Date of filing: 18.06.2014
(51) Int. Cl.: F02N 11/00, F02N 11/08, B60R 16/03

(54) **Combustion and emergency start controlling device having auxiliary power source and system thereof**

(30) Priority: 19.06.2013 US 201313921262
(71) Applicant: Yang, Tai-Her, Si-Hu Town Dzan-Hwa (TW)
(72) Inventor: Yang, Tai-Her, Si-Hu Town Dzan-Hwa (TW)
(74) Representative: Wright, Howard Hugh Burnby

(57) **Abstract**

The present invention provides an emergency starting switching device and/or a direct current boosted boost circuit device, so when the electric energy of the starting battery is insufficient, with the operation of the emergency starting switching device, the electric energy of the power storage devices is utilized for driving the starting motor so as to start the engine, and when the engine is started, with the boosted voltage of the direct current boosted boost circuit device, the ignition device and/or the fuel injection device is boosted so as to enhance the starting capability.

## Description

### BACKGOUND OF THE INVENTION

### (a) Field of the Invention

The present invention provides a combustion and emergency start controlling device having auxiliary power source and system thereof, wherein a direct current boosted boost circuit device (600) exclusively for driving an ignition device and/or a fuel injection device is installed, the voltage of the direct current power source is boosted by the direct current boosted boost circuit device (600), so the starting capability of the ignition device and/or the fuel injection device can be optimized through the boosted operation voltage, and in the subsequent operation of engine, the direct current boosted boost circuit device (600) is kept in a voltage boosting status for facilitating the subsequent operation of engine.

### (b) Description of the Prior Art

A conventional engine ignition or fuel injection device system is often designed to share the power source of a common battery with an engine starting motor, so when the engine is started, the motor starting current is relatively larger, the voltage of the battery is dropped (about 25 to 40%) thereby causing the poor ignition or the slowing down of the fuel injection device switch speed, so the engine starting becomes harder to be carried out, when the electric power supplied by the starting battery is insufficient, an external power source is required for assistance, so the efficiency is not adequate and the whole operation is inconvenient, moreover, if the voltage supplied by the battery is relatively lower during the operation, the performance of engine operation would be deteriorated.

### SUMMARY OF THE INVENTION

The present invention provides a combustion and emergency start controlling device having auxiliary power source and system thereof, wherein a direct current boosted boost circuit device (600) exclusively for driving an ignition device and/or a fuel injection device is installed, the voltage of the direct current power source is boosted by the direct current boosted boost circuit device (600), so the starting capability of the ignition device and/or the fuel injection device can be optimized through the boosted operation voltage, and in the subsequent operation of engine, the direct current boosted boost circuit device (600) is kept in a voltage boosting status for facilitating the subsequent operation of engine; and an auxiliary power storage device used for supplying the electric energy for emergency start is further installed, and with the installation of a charging isolation diode (111) for isolating the starting battery, the situation of causing the voltage of the battery to greatly drop due to a larger current being required for starting motor when the engine being started can be prevented, so the performance deterioration of engine starting due to the working voltage supplied to the direct current boosted boost circuit device (600) being greatly reduced can also be prevented; the system can be further installed with an emergency starting switching device (500), so when the electric energy of the starting battery is insufficient, with the operation of the emergency starting switching device (500), the electric energy of the auxiliary power storage device is utilized for driving the starting motor so as to start the engine, when the starting motor is served to start the engine, the voltage of the direct current power source is booted by the direct current boosted boost circuit device (600), so the starting capability of the ignition device and/or the fuel injection device can be optimized through the boosted operation voltage, and in the subsequent operation of engine, the direct current boosted boost circuit device (600) is kept in a voltage boosting status for facilitating the subsequent operation of engine;
when being applied for manually starting engine and the starting motor and the starting battery are not installed, the electric energy generated by the generator (200) is transferred through the regulating device (201) to the direct current boosted boost circuit device (600), so at the staring stage with lower engine rotation speed and the voltage of the generator is insufficient, the operation voltage of the engine ignition device and/or the fuel injection device can be boosted by the direct current boosted boost circuit device (600) thereby obtaining a better starting operation status, and in the subsequent operation of engine, the direct current boosted boost circuit device (600) is kept in a voltage boosting status for facilitating the subsequent operation of engine.

According to another aspect of the present invention, a combustion and emergency start controlling device having auxiliary power source and system thereof comprises an internal combustion engine (100); a starting motor (101) to drive the engine; a starting battery (104) for supplying electric energy to the starting motor (101); an engine ignition device (109) and/or a fuel injection device (110); and a direct current boosted boost circuit device (600) for boosting voltage during the operation of the starting motor and for supplying electrical energy to the engine ignition device (109) and/or the fuel injection device (110).

### BRIEF DESCRIPTION OF THE DRAWINGS

FIG. 1 is a circuit block diagram illustrating the direct current boosted boost circuit device being installed according to one embodiment of the present invention.
FIG. 2 is a diagram showing the variation of the working voltage according to the embodiment illustrated in FIG. 1.
FIG. 3 is a circuit block diagram illustrating the FIG. 1 being installed with a primary charging and discharging auxiliary power storage device (106) and an emergency starting switching device (500) according to one embodiment of the present invention.
FIG. 4 is a diagram showing the variation of the working voltage according to the embodiment illustrated in FIG.3.
FIG. 5 is a circuit block diagram illustrating the emergency starting switching device (500) controlling the primary charging and discharging auxiliary power storage device (106) for supplying electric energy according to the embodiment illustrating in FIG. 3.
FIG. 6 is a diagram showing the variation of the working voltage according to the embodiment illustrated in FIG. 5.
FIG. 7 is a circuit block diagram illustrating the FIG. 1 being installed with a primary charging and discharging auxiliary power storage device (106), the emergency starting switching device (500) and the secondary charging and discharging auxiliary power storage device (107) according to one embodiment of the present invention.
FIG. 8 is a diagram showing the variation of the working voltage according to the embodiment illustrated in FIG. 7.
FIG. 9 is a circuit block diagram illustrating the emergency starting switching device (500) controlling the primary charging and discharging auxiliary power storage device (106) for supplying electric energy according to the embodiment illustrating in FIG. 7.
FIG. 10 is a diagram showing the variation of the working voltage according to the embodiment illustrated in FIG. 9.
FIG. 11 is a circuit block diagram illustrating the engine being manually started and the direct current boosted boost circuit device being installed according to one embodiment of the present invention.
FIG. 12 is a diagram showing the variation of the output voltage of the direct current boosted boost circuit device shown in FIG. 11.

### DESCRIPTION OF MAIN COMPONENT SYMBOLS

- 100 :: Engine set
- 101 :: Starting motor
- 102 :: Relay
- 103 :: Starting switch
- 104 :: Starting battery
- 111 :: Isolation diode
- 106 :: Primary charging and discharging auxiliary power storage device
- 107 :: Secondary charging and discharging auxiliary power storage device
- 108 :: Isolation diode
- 109 :: Engine ignition device
- 110 :: Fuel injection device
- 200 :: Generator
- 201 :: Regulating devices
- 300 :: Engine rotating shaft
- 301 302 :: Transmission device
- 500 :: Emergency starting switching device
- 600 :: Direct current boosted boost circuit device
- 700 :: Energy storing and releasing device
- 1051 :: Diodes
- ECU100 :: Electric control unit
- OP100 :: Operation input device

### DETAILED DESCRIPTION OF THE PREFERRED EMBODIMENTS

The present invention provides a combustion and emergency start controlling device having auxiliary power source and system thereof, wherein a direct current boosted boost circuit device (600) exclusively for driving an ignition device and/or a fuel injection device is installed, the voltage of the direct current power source is boosted by the direct current boosted boost circuit device (600), so the starting capability of the ignition device and/or the fuel injection device can be optimized through the boosted operation voltage, and in the subsequent operation of engine, the direct current boosted boost circuit device (600) is kept in a voltage boosting status for facilitating the subsequent operation of engine; and an auxiliary power storage device used for supplying the electric energy for emergency start is further installed, and with the installation of a charging isolation diode (111) for isolating the starting battery, the situation of causing the voltage of the battery to greatly drop due to a larger current being required for starting motor when the engine being started can be prevented, so the performance deterioration of engine starting due to the working voltage supplied to the direct current boosted boost circuit device (600) being greatly reduced can also be prevented; the system can be further installed with an emergency starting switching device (500), so when the electric energy of the starting battery is insufficient, with the operation of the emergency starting switching device (500), the electric energy of the auxiliary power storage device is utilized for driving the starting motor so as to start the engine, when the starting motor is served to start the engine, the voltage of the direct current power source is booted by the direct current boosted boost circuit device (600), so the starting capability of the ignition device and/or the fuel injection device can be optimized through the boosted operation voltage, and in the subsequent operation of engine, the direct current boosted boost circuit device (600) is kept in a voltage boosting status for facilitating the subsequent operation of engine;
when being applied for manually starting engine and the starting motor and the starting battery are not installed, the electric energy generated by the generator (200) is transferred through the regulating device (201) to the direct current boosted boost circuit device (600), so at the staring stage with lower engine rotation speed and the voltage of the generator is insufficient, the operation voltage of the engine ignition device and/or the fuel injection device can be boosted by the direct current boosted boost circuit device (600) thereby obtaining a better starting operation status, and in the subsequent operation of engine, the direct current boosted boost circuit device (600) is kept in a voltage boosting status for facilitating the subsequent operation of engine.

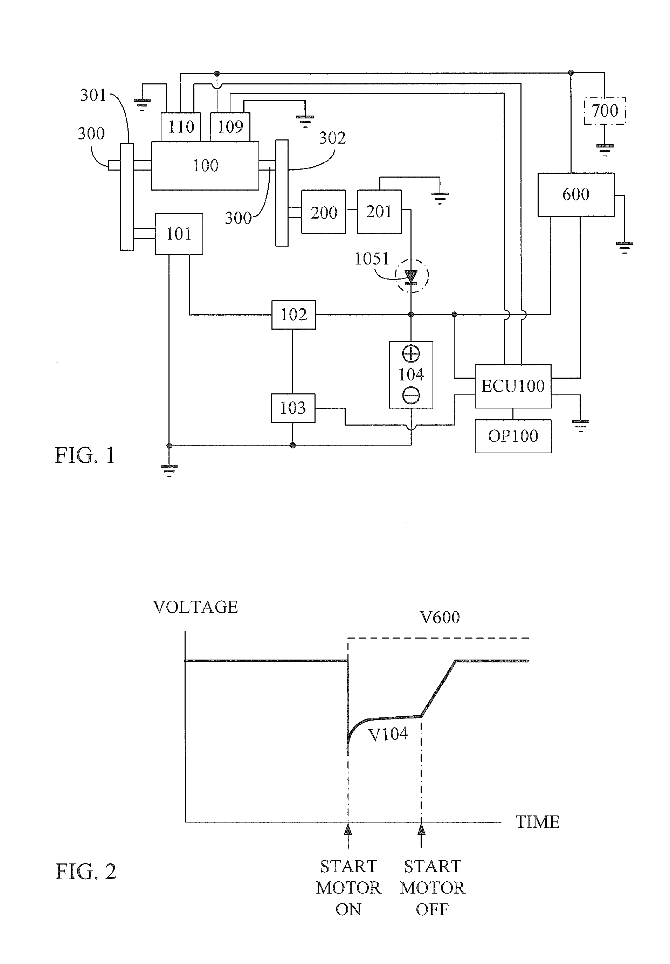

FIG. 1 is a circuit block diagram illustrating the direct current boosted boost circuit device being installed according to one embodiment of the present invention.

FIG. 2 is a diagram showing the variation of the working voltage according to the embodiment illustrated in FIG. 1.

As shown in FIG. 1, the power of the starting battery (104) supplies the electric energy to the direct current boosted boost circuit device (600), which mainly consists:
--Engine set (100): consists of an internal combustion engine using diesel, biodiesel, gasoline, natural gas or methanol as fuel;
--Engine rotating shaft (300): outputting rotating kinetic energy of the engine to drive loads, and coupled with the starting motor (101) through a transmission device (301), directly or through a transmission device (302) for being coupled to a generator (200);
--Starting motor (101): consists of a brush or brushless direct current or alternative current motor or a generator with motor capability, when a starting switch (103) receives manual operation or signals emitted by an electric control unit (ECU100), the motor is controlled to actuate a relay (102) for performing electric conducive engaging thereby enabling the electric energy of the starting battery (104) to be transferred for driving the starting motor (101), so the starting motor (101) can be served to directly or through the transmission device (301) to drive the engine set (100);
--Starting switch (103): consists of electromechanical switching elements or solid-state electronic switching elements for performing electric conductive engaging or terminating through manual operation or being controlled by the electric control unit (ECU100);
--Starting battery (104): consists of various rechargeable secondary batteries or super capacitors for supplying electric energy to the starting motor (101); and receiving the electric energy generated by the generator (200) for directly charging the starting battery (104) or charging the starting battery (104) through a regulating device (201), or charging the starting battery (104) through the external power;
--Generator (200): consists of an alternative or direct current generator driven by the engine directly or through the transmission device (302), and the generator (200) is served to generate alternative current electric energy or rectified direct current electric energy for outputting or to directly generate direct current electric energy for outputting;
--Regulating device (201): consist of electromechanical type or solid-state electronic circuits;
when the direct current generator is adopted as the generator (200), the electric energy outputted by the generator is directly outputted or through the regulating device (201) for being regulated then being outputted, so as to charge the starting battery (104) or supply electric energy to other loads;
when the alternative current generator is adopted as the generator (200), the alternative current electric energy of the generator is firstly rectified to the direct current electric energy then regulated by the regulating device (201) so as to be outputted, so as to charge the starting battery (104) and outputted to the direct current boosted boost circuit device (600);
--Engine ignition device (109): consists of electromechanical circuit elements and/or solid-state electronic circuit elements or the combination of the above, controlled by the electric control unit (ECU100), and providing ignition to the internal combustion engine for operating the engine;
--Fuel injection device (110): consists of a fuel injection mechanism having functions of controlling fuel injection timing, amount of fuel to be injected and injection pressure and a drive controlling circuit device, controlled by the electric control unit (ECU100) for injecting proper amount of fuel into the internal combustion engine in the proper timing;

At least one or both of the engine ignition device (109) and/or the fuel injection device (110) is driven by the boosted output electric energy of the direct current boosted boost circuit device (600);

The mentioned fuel injection device (110) includes being replaced by a carburetor;
--Direct current boosted boost circuit device (600): consists of solid-state electronic circuit elements or electromechanical circuit elements, driven by the electric energy of the starting battery (104) and/or the electric energy outputted by the regulating device (201), the electric control unit (ECU100) is controlled by an operation input device (OP100) thereby controlling the starting switch (103) to allow the relay (102) to be engaged, when the electric energy of the starting battery (104) is served to drive the starting motor (101), the direct current boosted boost circuit device (600) is also started for boosting voltage, so with the operation voltage being boosted, the starting capability of the engine ignition device (109) and/or the fuel injection device (110) is optimized for being in a booster operation status, the engine starting is therefore facilitated, and in the subsequent operation of engine, the direct current boosted boost circuit device (600) is kept in an electric energy supplying status with boosted voltage thereby facilitating the subsequent operation of engine and preventing from being affected by the voltage variation of the starting battery (104);

The output voltage boosted by the mentioned direct current boosted boost circuit device (600) is higher than the voltage of the input power source and is limited to be equal or lower than the highest allowable operation voltage of the engine ignition device (109) and/or the fuel injection device (110);
--Electric control unit (ECU100): consists of electromechanical circuit elements or solid-state electric circuit elements and/or chips and operation software, used for controlling the starting switch (103), and controlling the operation timing of the engine ignition device (109) and/or the fuel injection device (110) and/or the direct current boosted boost circuit device (600) according to the working angle of the operation cycle and the working status of the engine; the electric control unit (ECU100) can be replaced by a mechanical controlling structure and can be optionally installed;
--Operation input device (OP100): consists of a device or mechanism capable of converting into electric energy controlling signals for the operation of the engine set (100) through manual switch function or electric energy physical signal input; the operation input device (OP100) can be replaced by a mechanical controlling structure and can be optionally installed.

FIG. 2 is a diagram showing the variation of the working voltage according to the embodiment illustrated in FIG. 1; as shown in FIG. 2, V104 is the terminal voltage of the starting battery (104), V600 is the output voltage of the direct current boosted boost circuit device (600).

The engine ignition device (109), the fuel injection device (110), the starting battery (104), the generator (200), the regulating device (201) and the direct current boosted boost circuit device (600) shown in FIG. 1 can be separately installed or jointly structured by at least two or more than two of the above.

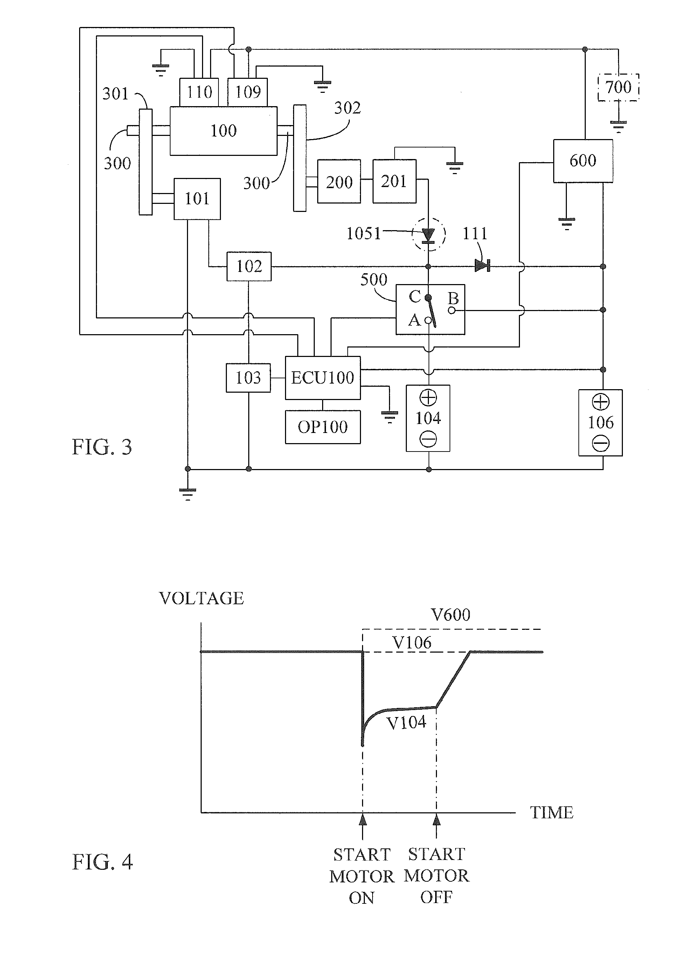

FIG. 3 is a circuit block diagram illustrating the FIG. 1 being installed with a primary charging and discharging auxiliary power storage device (106) and an emergency starting switching device (500) according to one embodiment of the present invention.

FIG. 4 is a diagram showing the variation of the working voltage according to the embodiment illustrated in FIG. 3.

As shown in FIG. 3, the primary charging and discharging auxiliary power storage device (106) exclusively for supplying electric energy required by the engine ignition device and/or the fuel injection device and emergency start is installed, and the separated-type charging power source is installed for respectively supplying electric energy for charging the starting battery of the engine and supplying electric energy to the direct current boosted boost circuit device (600), and the emergency starting switching device (500) and/or the direct current boosted boost circuit device (600) is installed; mainly consists of:
-- Engine set (100): consists of an internal combustion engine using diesel, biodiesel, gasoline, natural gas or methanol as fuel and installed with the starting motor (101);
--Engine rotating shaft (300): outputting rotating kinetic energy of the engine to drive loads, and coupled with the starting motor (101) through a transmission device (301), directly or through a transmission device (302) for being coupled to a generator (200);
--Starting motor (101): consists of a brush or brushless direct current or alternative current motor or a generator with motor capability, through a starting switch (103) for receiving manual operation or signals emitted by an electric control unit (ECU100), the motor is controlled to actuate a relay (102) for performing electric conducive engaging thereby enabling the electric energy of the starting battery (104) to be transferred for driving the starting motor (101), so the starting motor (101) can be served to directly or through the transmission device (301) to link the engine set (100);
--Starting switch (103): consists of electromechanical switching elements or solid-state electronic switching elements for performing electric conductive engaging or terminating through manual operation or being controlled by the electric control unit (ECU100);
--Starting battery (104): consists of various rechargeable secondary batteries or super capacitors for supplying electric energy to the starting motor (101); and receiving the electric energy generated by the generator (200) for directly charging the starting battery (104) through the emergency starting switching device (500), or charging the starting battery (104) through a regulating device (201) and the emergency starting switching device (500), or charging the starting battery (104) through the external power;
--Primary charging and discharging auxiliary power storage device (106): consists of various rechargeable batteries and super capacitors, receiving the electric energy from the starting battery (104) or the generated electric energy of the generator (200) driven by the engine for charging the primary charging and discharging auxiliary power storage device (106) through the isolation diode (111), or receiving the electric energy from the external charging device; the electric energy of the primary charging and discharging auxiliary power storage device (106) is supplied to the direct current boosted boost circuit device (600);
--Generator (200): consists of an alternative or direct current generator driven by the engine directly or through the transmission device (302), and the generator (200) is served to generate alternative current electric energy or rectified direct current electric energy for outputting or to directly generate direct current electric energy for outputting;
--Regulating device (201): consist of electromechanical type or solid-state electronic circuits;
   when the direct current generator is adopted as the generator (200), the direct current electric energy outputted by the generator is directly outputted or through the regulating device (201) for being regulated then being outputted so as to charge the starting battery (104) and through the isolation diode (111) for charging the primary charging and discharging auxiliary power storage device (106), then outputted to the direct current boosted boost circuit device (600);
   when the alternative current generator is adopted as the generator (200), the alternative current electric energy of the generator is firstly rectified to the direct current electric energy then through the regulating device (201) for charging the starting battery (104) and/or the primary charging and discharging auxiliary power storage device (106), and outputted to the direct current boosted boost circuit device (600);
--Engine ignition device (109): consists of electromechanical circuit elements and/or solid-state electronic circuit elements or the combination of the above, controlled by the electric control unit (ECU100), and providing ignition to the internal combustion engine for operating the engine;
--Fuel injection device (110): consists of a fuel injection mechanism having functions of controlling fuel injection timing, amount of fuel to be injected and injection pressure and a drive controlling circuit device, controlled by the electric control unit (ECU100) for injecting proper amount of fuel into the internal combustion engine in the proper timing;

At least one or both of the engine ignition device (109) and/or the fuel injection device (110) is driven by the boosted output electric energy of the direct current boosted boost circuit device (600);

The mentioned fuel injection device (110) includes being replaced by a carburetor;

And the emergency starting switching device (500) is installed,
--Emergency starting switching device (500): consists of three-terminal solid-state electronic switching devices or electromechanical switching devices or mechanical switching devices controlled manually or controlled by the electric control unit (ECU100), the common joint C is leaded to the positive terminal of the motor starting relay (102) and the starting switch (103), the joint A which is engaged in the normal status is leaded to the positive terminal of the starting battery (104), the joint B which is opened in the normal status and switched to the engaged status during emergency start is leaded to the positive terminal of the primary charging and discharging auxiliary power storage device (106), when the electric energy of the starting battery is insufficient, through operating the auxiliary switch device, the electric energy of the auxiliary battery can be served to drive the starting motor so as to start the engine;
--Direct current boosted boost circuit device (600): consists of solid-state electronic circuit elements or electromechanical circuit elements, driven by the electric energy of the primary charging and discharging auxiliary power storage device (106) and/or the electric energy outputted by the regulating device (201), the electric control unit (ECU100) is controlled by an operation input device (OP100) thereby controlling the starting switch (103) to allow the relay (102) to be engaged, when the electric energy of the starting battery (104) is served to drive the starting motor (101), the direct current boosted boost circuit device (600) is also started for boosting voltage, so with the operation voltage being boosted, the starting capability of the engine ignition device (109) and/or the fuel injection device (110) is optimized for being in a booster operation status, the engine starting is therefore facilitated, and in the subsequent operation of engine, the direct current boosted boost circuit device (600) is kept in an electric energy supplying status with boosted voltage thereby facilitating the subsequent operation of engine;

The output voltage boosted by the mentioned direct current boosted boost circuit device (600) is higher than the voltage of the input power source and is limited to be equal or lower than the highest allowable operation voltage of the engine ignition device (109) and/or the fuel injection device (110);
--Electric control unit (ECU100): consists of electromechanical circuit elements or solid-state electric circuit elements and/or chips and operation software, used for controlling the starting switch (103), and controlling the operation timing of the engine ignition device (109) and/or the fuel injection device (110) and/or the direct current boosted boost circuit device (600) according to the working angle of the operation cycle and the working status of the engine; the electric control unit (ECU100) can be replaced by a mechanical controlling structure and can be optionally installed;
--Operation input device (OP100): consists of a device or mechanism capable of converting into electric energy controlling signals for the operation of the engine set (100) through manual switch function or electric energy physical signal input; the operation input device (OP100) can be replaced by a mechanical controlling structure and can be optionally installed;

The engine ignition device (109), the fuel injection device (110) and the starting battery (104), the primary charging and discharging auxiliary power storage device (106), the isolation diode (111), the isolation diode (108), the emergency starting switching device (500), the generator (200), the regulating device (201) and the direct current boosted boost circuit device (600) shown in FIG. 3 can be separately installed or jointly structured by at least two or more than two of the above.

FIG. 4 is a diagram showing the variation of the working voltage according to the embodiment illustrated in FIG. 3; as shown in FIG. 4, V106 is the terminal voltage of the primary charging and discharging auxiliary power storage device (106), V104 is the terminal voltage of the starting battery (104), V600 is the output voltage of the direct current boosted boost circuit device (600).

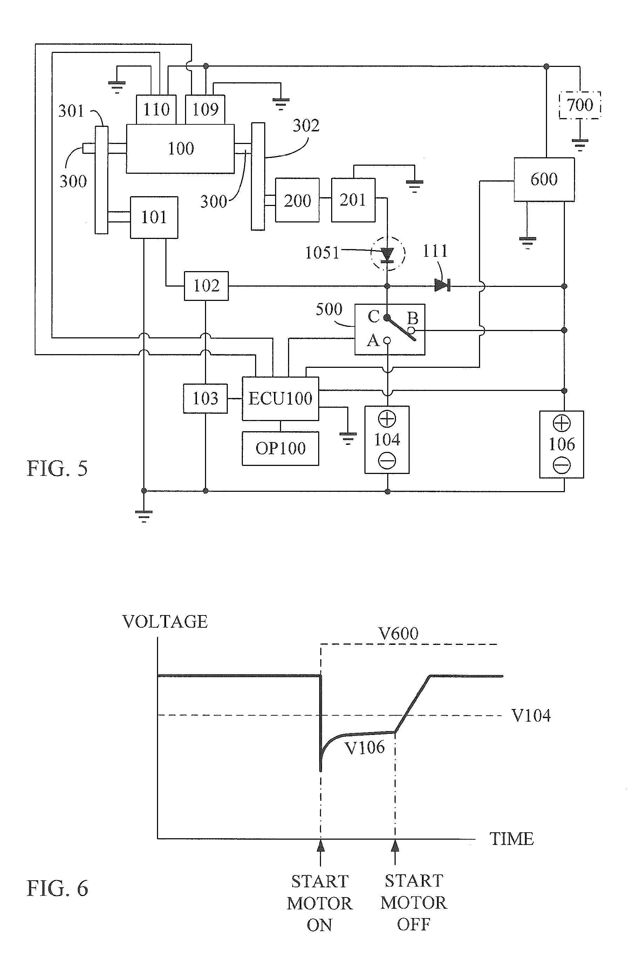

FIG. 5 is a circuit block diagram illustrating the emergency starting switching device (500) controlling the primary charging and discharging auxiliary power storage device (106) for supplying electric energy according to the embodiment illustrating in FIG. 3.

As shown in FIG. 5, the joint C of the emergency starting switching device (500) being leaded to the regulating device (201) is conducted with the joint B which is leaded to the primary charging and discharging auxiliary power storage device (106), the joint A and the joint C leaded to the starting battery (104) are not conducted, the primary charging and discharging auxiliary power storage device (106) is served as the driving electric power source for the starting motor (101).

FIG. 6 is a diagram showing the variation of the working voltage according to the embodiment illustrated in FIG. 5.

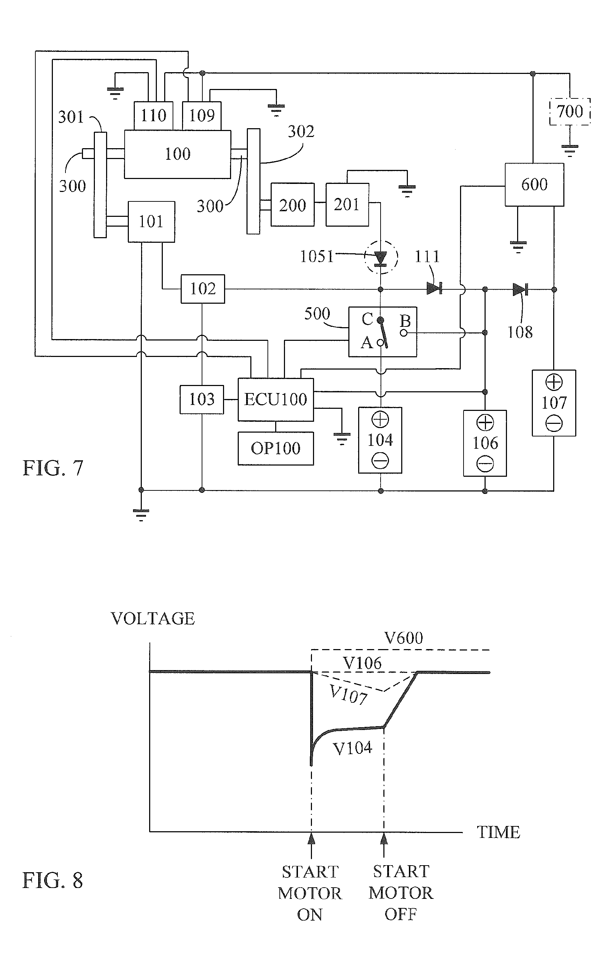

FIG. 7 is a circuit block diagram illustrating the FIG. 1 being installed with a primary charging and discharging auxiliary power storage device (106), the emergency starting switching device (500) and the secondary charging and discharging auxiliary power storage device (107) according to one embodiment of the present invention.

FIG. 8 is a diagram showing the variation of the working voltage according to the embodiment illustrated in FIG. 7.

As shown in FIG. 7, the primary charging and discharging auxiliary power storage device (106) and the secondary charging and discharging auxiliary power storage device (107) exclusively for supplying electric energy required by the engine ignition device and/or the fuel injection device and emergency start is installed, and the separated-type charging power source is installed for respectively supplying electric energy for charging the starting battery of the engine and supplying electric energy to the direct current boosted boost circuit device (600), and the emergency starting switching device (500) and/or the direct current boosted boost circuit device (600) is installed; mainly consists of:
-- Engine set (100): consists of an internal combustion engine using diesel, biodiesel, gasoline, natural gas or methanol as fuel and installed with the starting motor (101);
--Engine rotating shaft (300): outputting rotating kinetic energy of the engine to drive loads, and coupled with the starting motor (101) through a transmission device (301), directly or through a transmission device (302) for being coupled to a generator (200);
--Starting motor (101): consists of a brush or brushless direct current or alternative current motor or a generator with motor capability, through a starting switch (103) for receiving manual operation or signals emitted by an electric control unit (ECU100), the motor is controlled to actuate a relay (102) for performing electric conducive engaging thereby enabling the electric energy of the starting battery (104) to be transferred for driving the starting motor (101), so the starting motor (101) can be served to directly or through the transmission device (301) to link the engine set (100);
--Starting switch (103): consists of electromechanical switching elements or solid-state electronic switching elements for performing electric conductive engaging or terminating through manual operation or being controlled by the electric control unit (ECU100);
--Starting battery (104): consists of various rechargeable secondary batteries or super capacitors for supplying electric energy to the starting motor (101); and receiving the electric energy generated by the generator (200) for directly charging the starting battery (104) through the emergency starting switching device (500), or charging the starting battery (104) through a regulating device (201) and the emergency starting switching device (500), or charging the starting battery (104) through the external power;
--Primary charging and discharging auxiliary power storage device (106): consists of various rechargeable batteries and super capacitors, receiving the electric energy from the starting battery (104) or the generated electric energy of the generator (200) driven by the engine for charging the primary charging and discharging auxiliary power storage device (106) through the isolation diode (111), or receiving the electric energy from the external charging device;
--Secondary charging and discharging auxiliary power storage device (107): consists of rechargeable secondary batteries or super capacitors, capable of storing the electric energy from the primary charging and discharging auxiliary power storage device (106) through the isolation diode (108) so as to output to the direct current boosted boost circuit device (600);
--Isolation diode (108): installed between the primary charging and discharging auxiliary power storage device (106) and the secondary charging and discharging auxiliary power storage device (107), the isolation diode (108) is serially installed according to the current flowing direction of the primary charging and discharging auxiliary power storage device (106) towards the secondary charging and discharging auxiliary power storage device (107), thereby being avoided to control the emergency starting switching device (500) and the primary charging and discharging auxiliary power storage device (106) being able to be served as the power source for emergency engine starting, the secondary charging and discharging auxiliary power storage device (107) reversely supplies electric energy to the primary charging and discharging auxiliary power storage device (106);
--Generator (200): consists of an alternative or direct current generator driven by the engine directly or through the transmission device (302), and the generator (200) is served to generate alternative current electric energy or rectified direct current electric energy for outputting or to directly generate direct current electric energy for outputting;
--Regulating device (201): consist of electromechanical type or solid-state electronic circuits;
   when the direct current generator is adopted as the generator (200), the electric energy outputted by the generator is directly outputted or through the regulating device (201) for being regulated then being outputted so as to charge the starting battery (104) and through the isolation diode (111) for charging the primary charging and discharging auxiliary power storage device (106), and through the isolation diode (108) for charging the secondary charging and discharging auxiliary power storage device (107), then outputted to the direct current boosted boost circuit device (600);
   when the alternative current generator is adopted as the generator (200), the alternative current electric energy of the generator is firstly rectified to the direct current electric energy then through the regulating device (201) for charging the starting battery (104) and/or the primary charging and discharging auxiliary power storage device (106) and/or the secondary charging and discharging auxiliary power storage device (107), then outputted to the direct current boosted boost circuit device (600);
--Engine ignition device (109): consists of electromechanical circuit elements and/or solid-state electronic circuit elements or the combination of the above, controlled by the electric control unit (ECU100), and providing ignition to the internal combustion engine for operating the engine;
--Fuel injection device (110): consists of a fuel injection mechanism having functions of controlling fuel injection timing, amount of fuel to be injected and injection pressure and a drive controlling circuit device, controlled by the electric control unit (ECU100) for injecting proper amount of fuel into the internal combustion engine in the proper timing;

At least one or both of the engine ignition device (109) and/or the fuel injection device (110) is driven by the boosted output electric energy of the direct current boosted boost circuit device (600);

The mentioned fuel injection device (110) includes being replaced by a carburetor;

And the emergency starting switching device (500) is installed,
--Emergency starting switching device (500): consists of three-terminal solid-state electronic switching devices or electromechanical switching devices or mechanical switching devices controlled manually or controlled by the electric control unit (ECU100), the common joint C is leaded to the positive terminal of the motor starting relay (102) and the starting switch (103), the joint A which is engaged in the normal status is leaded to the positive terminal of the starting battery (104), the joint B which is opened in the normal status and switched to the engaged status during emergency start is leaded to the positive terminal of the primary charging and discharging auxiliary power storage device (106), when the electric energy of the starting battery is insufficient, through operating the auxiliary switch device, the electric energy of the auxiliary battery can be served to drive the starting motor so as to start the engine;
--Direct current boosted boost circuit device (600): consists of solid-state electronic circuit elements or electromechanical circuit elements, driven by the electric energy of the secondary charging and discharging auxiliary power storage device (107) and/or the electric energy outputted by the regulating device (201), the electric control unit (ECU100) is controlled by an operation input device (OP100) thereby controlling the starting switch (103) to allow the relay (102) to be engaged, when the electric energy of the starting battery (104) is served to drive the starting motor (101), the direct current boosted boost circuit device (600) is also started for boosting voltage, so with the operation voltage being boosted, the starting capability of the engine ignition device (109) and/or the fuel injection device (110) is optimized for being in a booster operation status, the engine starting is therefore facilitated, and in the subsequent operation of engine, the direct current boosted boost circuit device (600) is kept in an electric energy supplying status with boosted voltage thereby facilitating the subsequent operation of engine and preventing from being affected by the voltage variation of the secondary charging and discharging auxiliary power storage device (107);

The output voltage boosted by the mentioned direct current boosted boost circuit device (600) is higher than the voltage of the input power source and is limited to be equal or lower than the highest allowable operation voltage of the engine ignition device (109) and/or the fuel injection device (110);
--Electric control unit (ECU100): consists of electromechanical circuit elements or solid-state electric circuit elements and/or chips and operation software, used for controlling the starting switch (103), and controlling the operation timing of the engine ignition device (109) and/or the fuel injection device (110) and/or the direct current boosted boost circuit device (600) according to the working angle of the operation cycle and the working status of the engine; the electric control unit (ECU100) can be replaced by a mechanical controlling structure and can be optionally installed;
--Operation input device (OP100): consists of a device or mechanism capable of converting into electric energy controlling signals for the operation of the engine set (100) through manual switch function or electric energy physical signal input; the operation input device (OP100) can be replaced by a mechanical controlling structure and can be optionally installed;

The engine ignition device (109), the fuel injection device (110) and the starting battery (104), the primary charging and discharging auxiliary power storage device (106), the isolation diode (111), the isolation diode (108), and the secondary charging and discharging auxiliary power storage device (107), the emergency starting switching device (500), the generator (200), the regulating device (201) and the direct current boosted boost circuit device (600) shown in FIG. 7 can be separately installed or jointly structured by at least two or more than two of the above.

FIG. 8 is a diagram showing the variation of the working voltage according to the embodiment illustrated in FIG. 7; as shown in FIG. 8, V106 is the terminal voltage of the primary charging and discharging auxiliary power storage device (106), V107 is the terminal voltage of the secondary charging and discharging auxiliary power storage device (107), V104 is the terminal voltage of the starting battery (104), V600 is the output voltage of the direct current boosted boost circuit device (600).

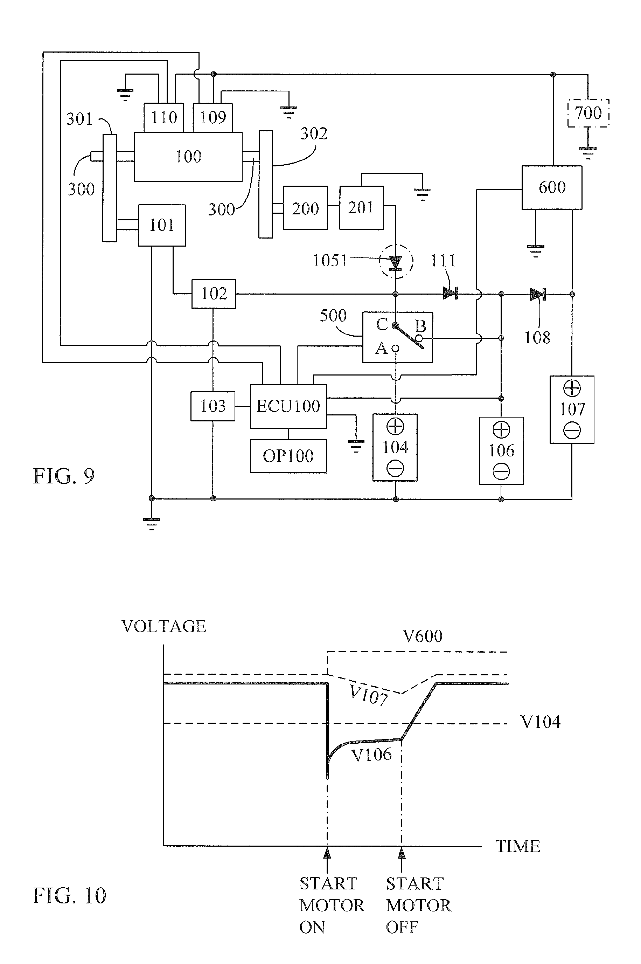

FIG. 9 is a circuit block diagram illustrating the emergency starting switching device (500) controlling the primary charging and discharging auxiliary power storage device (106) for supplying electric energy according to the embodiment illustrating in FIG. 7.

As shown in FIG. 9, the joint C of the emergency starting switching device (500) being leaded to the regulating device (201) is conducted with the joint B which is leaded to the primary charging and discharging auxiliary power storage device (106), the joint A and the joint C leaded to the starting battery (104) are not conducted, the primary charging and discharging auxiliary power storage device (106) is served as the driving electric power source for the starting motor (101).

FIG. 10 is a diagram showing the variation of the working voltage according to the embodiment illustrated in FIG. 9.

According to the combustion and emergency start controlling device having auxiliary power source and system thereof, if the engine is manually started and the starting motor (101) and the starting battery (104) are not installed, only the generator (200) and the regulating device (201) are required to be installed for supplying electric energy to the direct current boosted boost circuit device (600).

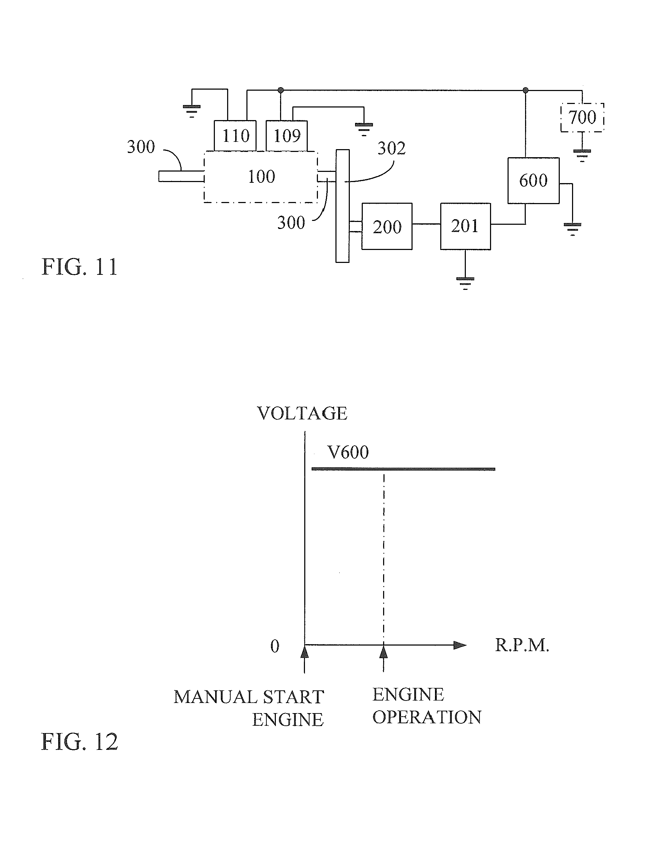

FIG. 11 is a circuit block diagram illustrating the engine being manually started and the direct current boosted boost circuit device being installed according to one embodiment of the present invention.

FIG. 12 is a diagram showing the variation of the output voltage of the direct current boosted boost circuit device shown in FIG. 11.

According to the embodiment disclosed in FIG. 11, if the engine is manually started, the starting motor (101), the starting battery (104) and the isolation diodes are not installed, the generator windings of the generator (200) and the regulating device (201) are served to supply electric energy to the direct current boosted boost circuit device (600), so when the engine is manually started with lower engine rotation speed and the voltage of the generator (200) is relatively lower, the electric energy generated by the generator (200) can be boosted by the direct current boosted boost circuit device (600) thereby improving the operation of the engine ignition device (109) and/or the fuel injection device (110), and in the subsequent operation of engine, the direct current boosted boost circuit device (600) is kept in a voltage boosting status for facilitating the subsequent operation of engine;

The output voltage boosted by the mentioned direct current boosted boost circuit device (600) is limited to be equal or lower than the highest allowable operation voltage of the engine ignition device (109) and/or the fuel injection device (110);
--Engine ignition device (109): consists of electromechanical circuit elements and/or solid-state electronic circuit elements or the combination of the above, and used for providing ignition to the internal combustion engine for operating the engine;
--Fuel injection device (110): consists of a fuel injection mechanism having functions of controlling fuel injection timing, amount of fuel to be injected and injection pressure and a drive controlling circuit device, and used for injecting proper amount of fuel into the internal combustion engine in the proper timing;

At least one or both of the engine ignition device (109) and/or the fuel injection device (110) is driven by the boosted output electric energy of the direct current boosted boost circuit device (600);

The mentioned fuel injection device (110) includes being replaced by a carburetor;
--Direct current boosted boost circuit device (600): consists of solid-state electronic circuit elements or electromechanical circuit elements, driven by the electric energy outputted by the regulating device (201), when the engine is manually started, the direct current boosted boost circuit device (600) is also started for boosting voltage, so with the operation voltage being boosted, the starting capability of the engine ignition device (109) and/or the fuel injection device (110) is optimized for being in a booster operation status, the engine starting is therefore facilitated, and in the subsequent operation of engine, the direct current boosted boost circuit device (600) is kept in an electric energy supplying status with boosted voltage thereby facilitating the subsequent operation of engine;

The output voltage boosted by the mentioned direct current boosted boost circuit device (600) is higher than the voltage of the input power source and is limited to be equal or lower than the highest allowable operation voltage of the engine ignition device (109) and/or the fuel injection device (110);
--Electric control unit (ECU100): consists of electromechanical circuit elements or solid-state electric circuit elements and/or chips and operation software, after the engine is manually started, the electric control unit (ECU100) receives the electric energy outputted by the regulating device (201) for controlling the operation timing of the engine ignition device (109) and/or the fuel injection device (110) and/or the direct current boosted boost circuit device (600) according to the working angle of the operation cycle and the working status of the engine; the electric control unit (ECU100) can be replaced by a mechanical controlling structure and can be optionally installed;
--Operation input device (OP100): consists of a device or mechanism capable of converting into electric energy controlling signals for the operation of the engine set (100) through manual switch function or electric energy physical signal input; the operation input device (OP100) can be replaced by a mechanical controlling structure and can be optionally installed;

The engine ignition device (109), the fuel injection device (110), the generator (200), the regulating device (201) and the direct current boosted boost circuit device (600) shown in FIG. 11 can be individually and separately installed or jointly structured by at least two or more than two of the above.

According to the embodiments disclosed from FIG. 1 to FIG. 10, the generator (200) can be the alternative current generator or the direct current generator, if the generator windings is not equipped with the reverse current preventing function, and/or the regulating device (201) is not equipped with the reverse current preventing function, diodes (1051) can be serially installed with a normal-polarity manner with respect to the current outputting direction for preventing reverse current;

If the generator (200) of the generator windings is equipped with the reverse current preventing function, or the regulating device (201) is equipped with the reverse current preventing function, the diodes (1051) are not necessary to be installed.

According to the embodiments disclosed from FIG. 1 to FIG. 12, the boosted voltage output terminal of the direct current boosted boost circuit device (600) is further connected in parallel with an energy storing and releasing device (700) thereby increasing the electricity supplying capability of the instant high power output of the direct current boosted boost circuit device (600), the energy storing and releasing device (700) is individually composed of rechargeable batteries or capacitors or super capacitors or installed in the direct current boosted boost circuit device (600).

According to the embodiments disclosed from FIG. 1 to FIG. 12, the boosted voltage outputted by the direct current boosted boost circuit device (600) can be controlled through the electric control unit (ECU100), during the engine starting and the subsequent operation of engine, the value of boosted voltage outputted by the direct current boosted boost circuit device (600) is the same or randomly varied through being controlled by the electric control unit (ECU100).

According to the embodiments disclosed from FIG. 1 to FIG. 10, the starting battery (104) and/or the primary charging and discharging auxiliary power storage device (106) can adopt a component having higher energy density, and the secondary charging and discharging auxiliary power storage device (107) and/or the energy storing and releasing device (700) can adopt a component having higher power density, thereby matching with the ignition performance and being more economical.

According to the combustion and emergency start controlling device having auxiliary power source and system thereof, which is the same as the engine available in the market, the generator windings of the generator (200) is further installed with a pick up coil, the phase angle of the generated electric energy wave and/or the voltage level of generated electric energy can be served to provide references for the electric control unit (ECU100) to control the timing for fuel injection and/or ignition, the mentioned pick up coil can be replaced by other devices having the same functions.

The certain component structures applicable in the combustion and emergency start controlling device having auxiliary power source and system thereof includes the components being individually installed, or further including following characteristics: at least two or more than two of the direct current boosted boost circuit device (600), and/or the energy storing and releasing device (700), and/or the primary charging and discharging auxiliary power storage device (106), and/or the secondary charging and discharging auxiliary power storage device (107), and/or the emergency starting switching device (500), and/or the isolation diode (111), and/or the isolation diode (108), the diodes (1051), the electric control unit (ECU100) and the operation input device (OP100) are jointly structured as a compound component, or at least one of the mentioned components is jointly structured with at least one of the conventional engine starting and combustion related components such as the starting motor (101), the relay (102), the starting switch (103), the generator (200), the regulating device (201), the engine ignition device (109) and the fuel injection device (110) for forming as a compound component.

## Claims

1. A combustion and emergency start controlling device having auxiliary power source and system thereof, wherein a direct current boosted boost circuit device (600) exclusively for driving an ignition device and/or a fuel injection device is installed, the voltage of the direct current power source is boosted by the direct current boosted boost circuit device (600), so the starting capability of the ignition device and/or the fuel injection device can be optimized through the boosted operation voltage, and in the subsequent operation of engine, the direct current boosted boost circuit device (600) is kept in a voltage boosting status for facilitating the subsequent operation of engine; and an auxiliary power storage device used for supplying the electric energy for emergency start is further installed, and with the installation of a charging isolation diode (111) for isolating the starting battery, the situation of causing the voltage of the battery to greatly drop due to a larger current being required for starting motor when the engine being started can be prevented, so the performance deterioration of engine starting due to the working voltage supplied to the direct current boosted boost circuit device (600) being greatly reduced can also be prevented; the system can be further installed with an emergency starting switching device (500), so when the electric energy of the starting battery is insufficient, with the operation of the emergency starting switching device (500), the electric energy of the auxiliary power storage device is utilized for driving the starting motor so as to start the engine, when the starting motor is served to start the engine, the voltage of the direct current power source is booted by the direct current boosted boost circuit device (600), so the starting capability of the ignition device and/or the fuel injection device can be optimized through the boosted operation voltage, and in the subsequent operation of engine, the direct current boosted boost circuit device (600) is kept in a voltage boosting status for facilitating the subsequent operation of engine.

2. A combustion and emergency start controlling device having auxiliary power source and system thereof as claimed in claim 1, wherein the power of the starting battery (104) supplies the electric energy to the direct current boosted boost circuit device (600), which mainly consists:
--Engine set (100): consists of an internal combustion engine using diesel, biodiesel, gasoline, natural gas or methanol as fuel;
--Engine rotating shaft (300): outputting rotating kinetic energy of the engine to drive loads, and coupled with the starting motor (101) through a transmission device (301), directly or through a transmission device (302) for being coupled to a generator (200);
--Starting motor (101): consists of a brush or brushless direct current or alternative current motor or a generator with motor capability, when a starting switch (103) receives manual operation or signals emitted by an electric control unit (ECU100), the motor is controlled to actuate a relay (102) for performing electric conducive engaging thereby enabling the electric energy of the starting battery (104) to be transferred for driving the starting motor (101), so the starting motor (101) can be served to directly or through the transmission device (301) to drive the engine set (100);
--Starting switch (103): consists of electromechanical switching elements or solid-state electronic switching elements for performing electric conductive engaging or terminating through manual operation or being controlled by the electric control unit (ECU100);
--Starting battery (104): consists of various rechargeable secondary batteries or super capacitors for supplying electric energy to the starting motor (101); and receiving the electric energy generated by the generator (200) for directly charging the starting battery (104) or charging the starting battery (104) through a regulating device (201), or charging the starting battery (104) through the external power;
--Generator (200): consists of an alternative or direct current generator driven by the engine directly or through the transmission device (302), and the generator (200) is served to generate alternative current electric energy or rectified direct current electric energy for outputting or to directly generate direct current electric energy for outputting;
--Regulating device (201): consist of electromechanical type or solid-state electronic circuits;
when the direct current generator is adopted as the generator (200), the electric energy outputted by the generator is directly outputted or through the regulating device (201) for being regulated then being outputted, so as to charge the starting battery (104) or supply electric energy to other loads;
when the alternative current generator is adopted as the generator (200), the alternative current electric energy of the generator is firstly rectified to the direct current electric energy then regulated by the regulating device (201) so as to be outputted, so as to charge the starting battery (104) and outputted to the direct current boosted boost circuit device (600);
--Engine ignition device (109): consists of electromechanical circuit elements and/or solid-state electronic circuit elements or the combination of the above, controlled by the electric control unit (ECU100), and providing ignition to the internal combustion engine for operating the engine;
--Fuel injection device (110): consists of a fuel injection mechanism having functions of controlling fuel injection timing, amount of fuel to be injected and injection pressure and a drive controlling circuit device, controlled by the electric control unit (ECU100) for injecting proper amount of fuel into the internal combustion engine in the proper timing;
At least one or both of the engine ignition device (109) and/or the fuel injection device (110) is driven by the boosted output electric energy of the direct current boosted boost circuit device (600);
The mentioned fuel injection device (110) includes being replaced by a carburetor;
--Direct current boosted boost circuit device (600): consists of solid-state electronic circuit elements or electromechanical circuit elements, driven by the electric energy of the starting battery (104) and/or the electric energy outputted by the regulating device (201), the electric control unit (ECU100) is controlled by an operation input device (OP100) thereby controlling the starting switch (103) to allow the relay (102) to be engaged, when the electric energy of the starting battery (104) is served to drive the starting motor (101), the direct current boosted boost circuit device (600) is also started for boosting voltage, so with the operation voltage being boosted, the starting capability of the engine ignition device (109) and/or the fuel injection device (110) is optimized for being in a booster operation status, the engine starting is therefore facilitated, and in the subsequent operation of engine, the direct current boosted boost circuit device (600) is kept in an electric energy supplying status with boosted voltage thereby facilitating the subsequent operation of engine and preventing from being affected by the voltage variation of the starting battery (104);
The output voltage boosted by the mentioned direct current boosted boost circuit device (600) is higher than the voltage of the input power source and is limited to be equal or lower than the highest allowable operation voltage of the engine ignition device (109) and/or the fuel injection device (110);
--Electric control unit (ECU100): consists of electromechanical circuit elements or solid-state electric circuit elements and/or chips and operation software, used for controlling the starting switch (103), and controlling the operation timing of the engine ignition device (109) and/or the fuel injection device (110) and/or the direct current boosted boost circuit device (600) according to the working angle of the operation cycle and the working status of the engine; the electric control unit (ECU100) can be replaced by a mechanical controlling structure and can be optionally installed;
--Operation input device (OP100): consists of a device or mechanism capable of converting into electric energy controlling signals for the operation of the engine set (100) through manual switch function or electric energy physical signal input; the operation input device (OP100) can be replaced by a mechanical controlling structure and can be optionally installed.

3. A combustion and emergency start controlling device having auxiliary power source and system thereof as claimed in claim 1, wherein the primary charging and discharging auxiliary power storage device (106) exclusively for supplying electric energy required by the engine ignition device and/or the fuel injection device and emergency start is installed, and the separated-type charging power source is installed for respectively supplying electric energy for charging the starting battery of the engine and supplying electric energy to the direct current boosted boost circuit device (600), and the emergency starting switching device (500) and/or the direct current boosted boost circuit device (600) is installed; mainly consists of:
-- Engine set (100): consists of an internal combustion engine using diesel, biodiesel, gasoline, natural gas or methanol as fuel and installed with the starting motor (101);
--Engine rotating shaft (300): outputting rotating kinetic energy of the engine to drive loads, and coupled with the starting motor (101) through a transmission device (301), directly or through a transmission device (302) for being coupled to a generator (200);
--Starting motor (101): consists of a brush or brushless direct current or alternative current motor or a generator with motor capability, through a starting switch (103) for receiving manual operation or signals emitted by an electric control unit (ECU100), the motor is controlled to actuate a relay (102) for performing electric conducive engaging thereby enabling the electric energy of the starting battery (104) to be transferred for driving the starting motor (101), so the starting motor (101) can be served to directly or through the transmission device (301) to link the engine set (100);
--Starting switch (103): consists of electromechanical switching elements or solid-state electronic switching elements for performing electric conductive engaging or terminating through manual operation or being controlled by the electric control unit (ECU100);
--Starting battery (104): consists of various rechargeable secondary batteries or super capacitors for supplying electric energy to the starting motor (101); and receiving the electric energy generated by the generator (200) for directly charging the starting battery (104) through the emergency starting switching device (500), or charging the starting battery (104) through a regulating device (201) and the emergency starting switching device (500), or charging the starting battery (104) through the external power;
--Primary charging and discharging auxiliary power storage device (106): consists of various rechargeable batteries and super capacitors, receiving the electric energy from the starting battery (104) or the generated electric energy of the generator (200) driven by the engine for charging the primary charging and discharging auxiliary power storage device (106) through the isolation diode (111), or receiving the electric energy from the external charging device; the electric energy of the primary charging and discharging auxiliary power storage device (106) is supplied to the direct current boosted boost circuit device (600);
--Generator (200): consists of an alternative or direct current generator driven by the engine directly or through the transmission device (302), and the generator (200) is served to generate alternative current electric energy or rectified direct current electric energy for outputting or to directly generate direct current electric energy for outputting;
--Regulating device (201): consist of electromechanical type or solid-state electronic circuits;
when the direct current generator is adopted as the generator (200), the direct current electric energy outputted by the generator is directly outputted or through the regulating device (201) for being regulated then being outputted so as to charge the starting battery (104) and through the isolation diode (111) for charging the primary charging and discharging auxiliary power storage device (106), then outputted to the direct current boosted boost circuit device (600);
when the alternative current generator is adopted as the generator (200), the alternative current electric energy of the generator is firstly rectified to the direct current electric energy then through the regulating device (201) for charging the starting battery (104) and/or the primary charging and discharging auxiliary power storage device (106), and outputted to the direct current boosted boost circuit device (600);
--Engine ignition device (109): consists of electromechanical circuit elements and/or solid-state electronic circuit elements or the combination of the above, controlled by the electric control unit (ECU100), and providing ignition to the internal combustion engine for operating the engine;
--Fuel injection device (110): consists of a fuel injection mechanism having functions of controlling fuel injection timing, amount of fuel to be injected and injection pressure and a drive controlling circuit device, controlled by the electric control unit (ECU100) for injecting proper amount of fuel into the internal combustion engine in the proper timing;
At least one or both of the engine ignition device (109) and/or the fuel injection device (110) is driven by the boosted output electric energy of the direct current boosted boost circuit device (600);
The mentioned fuel injection device (110) includes being replaced by a carburetor; And the emergency starting switching device (500) is installed,
--Emergency starting switching device (500): consists of three-terminal solid-state electronic switching devices or electromechanical switching devices or mechanical switching devices controlled manually or controlled by the electric control unit (ECU100), the common joint C is leaded to the positive terminal of the motor starting relay (102) and the starting switch (103), the joint A which is engaged in the normal status is leaded to the positive terminal of the starting battery (104), the joint B which is opened in the normal status and switched to the engaged status during emergency start is leaded to the positive terminal of the primary charging and discharging auxiliary power storage device (106), when the electric energy of the starting battery is insufficient, through operating the auxiliary switch device, the electric energy of the auxiliary battery can be served to drive the starting motor so as to start the engine;
--Direct current boosted boost circuit device (600): consists of solid-state electronic circuit elements or electromechanical circuit elements, driven by the electric energy of the primary charging and discharging auxiliary power storage device (106) and/or the electric energy outputted by the regulating device (201), the electric control unit (ECU100) is controlled by an operation input device (OP100) thereby controlling the starting switch (103) to allow the relay (102) to be engaged, when the electric energy of the starting battery (104) is served to drive the starting motor (101), the direct current boosted boost circuit device (600) is also started for boosting voltage, so with the operation voltage being boosted, the starting capability of the engine ignition device (109) and/or the fuel injection device (110) is optimized for being in a booster operation status, the engine starting is therefore facilitated, and in the subsequent operation of engine, the direct current boosted boost circuit device (600) is kept in an electric energy supplying status with boosted voltage thereby facilitating the subsequent operation of engine;
The output voltage boosted by the mentioned direct current boosted boost circuit device (600) is higher than the voltage of the input power source and is limited to be equal or lower than the highest allowable operation voltage of the engine ignition device (109) and/or the fuel injection device (110);
--Electric control unit (ECU100): consists of electromechanical circuit elements or solid-state electric circuit elements and/or chips and operation software, used for controlling the starting switch (103), and controlling the operation timing of the engine ignition device (109) and/or the fuel injection device (110) and/or the direct current boosted boost circuit device (600) according to the working angle of the operation cycle and the working status of the engine; the electric control unit (ECU100) can be replaced by a mechanical controlling structure and can be optionally installed;
--Operation input device (OP100): consists of a device or mechanism capable of converting into electric energy controlling signals for the operation of the engine set (100) through manual switch function or electric energy physical signal input; the operation input device (OP100) can be replaced by a mechanical controlling structure and can be optionally installed.

4. A combustion and emergency start controlling device having auxiliary power source and system thereof as claimed in claim 1, wherein the primary charging and discharging auxiliary power storage device (106) and the secondary charging and discharging auxiliary power storage device (107) exclusively for supplying electric energy required by the engine ignition device and/or the fuel injection device and emergency start is installed, and the separated-type charging power source is installed for respectively supplying electric energy for charging the starting battery of the engine and supplying electric energy to the direct current boosted boost circuit device (600), and the emergency starting switching device (500) and/or the direct current boosted boost circuit device (600) is installed; mainly consists of:
-- Engine set (100): consists of an internal combustion engine using diesel, biodiesel, gasoline, natural gas or methanol as fuel and installed with the starting motor (101);
--Engine rotating shaft (300): outputting rotating kinetic energy of the engine to drive loads, and coupled with the starting motor (101) through a transmission device (301), directly or through a transmission device (302) for being coupled to a generator (200);
--Starting motor (101): consists of a brush or brushless direct current or alternative current motor or a generator with motor capability, through a starting switch (103) for receiving manual operation or signals emitted by an electric control unit (ECU100), the motor is controlled to actuate a relay (102) for performing electric conducive engaging thereby enabling the electric energy of the starting battery (104) to be transferred for driving the starting motor (101), so the starting motor (101) can be served to directly or through the transmission device (301) to link the engine set (100);
--Starting switch (103): consists of electromechanical switching elements or solid-state electronic switching elements for performing electric conductive engaging or terminating through manual operation or being controlled by the electric control unit (ECU100);
--Starting battery (104): consists of various rechargeable secondary batteries or super capacitors for supplying electric energy to the starting motor (101); and receiving the electric energy generated by the generator (200) for directly charging the starting battery (104) through the emergency starting switching device (500), or charging the starting battery (104) through a regulating device (201) and the emergency starting switching device (500), or charging the starting battery (104) through the external power;
--Primary charging and discharging auxiliary power storage device (106): consists of various rechargeable batteries and super capacitors, receiving the electric energy from the starting battery (104) or the generated electric energy of the generator (200) driven by the engine for charging the primary charging and discharging auxiliary power storage device (106) through the isolation diode (111), or receiving the electric energy from the external charging device;
--Secondary charging and discharging auxiliary power storage device (107): consists of rechargeable secondary batteries or super capacitors, capable of storing the electric energy from the primary charging and discharging auxiliary power storage device (106) through the isolation diode (108) so as to output to the direct current boosted boost circuit device (600);
--Isolation diode (108): installed between the primary charging and discharging auxiliary power storage device (106) and the secondary charging and discharging auxiliary power storage device (107), the isolation diode (108) is serially installed according to the current flowing direction of the primary charging and discharging auxiliary power storage device (106) towards the secondary charging and discharging auxiliary power storage device (107), thereby being avoided to control the emergency starting switching device (500) and the primary charging and discharging auxiliary power storage device (106) being able to be served as the power source for emergency engine starting, the secondary charging and discharging auxiliary power storage device (107) reversely supplies electric energy to the primary charging and discharging auxiliary power storage device (106);
--Generator (200): consists of an alternative or direct current generator driven by the engine directly or through the transmission device (302), and the generator (200) is served to generate alternative current electric energy or rectified direct current electric energy for outputting or to directly generate direct current electric energy for outputting;
--Regulating device (201): consist of electromechanical type or solid-state electronic circuits;
when the direct current generator is adopted as the generator (200), the electric energy outputted by the generator is directly outputted or through the regulating device (201) for being regulated then being outputted so as to charge the starting battery (104) and through the isolation diode (111) for charging the primary charging and discharging auxiliary power storage device (106), and through the isolation diode (108) for charging the secondary charging and discharging auxiliary power storage device (107), then outputted to the direct current boosted boost circuit device (600);
when the alternative current generator is adopted as the generator (200), the alternative current electric energy of the generator is firstly rectified to the direct current electric energy then through the regulating device (201) for charging the starting battery (104) and/or the primary charging and discharging auxiliary power storage device (106) and/or the secondary charging and discharging auxiliary power storage device (107), then outputted to the direct current boosted boost circuit device (600);
--Engine ignition device (109): consists of electromechanical circuit elements and/or solid-state electronic circuit elements or the combination of the above, controlled by the electric control unit (ECU100), and providing ignition to the internal combustion engine for operating the engine;
--Fuel injection device (110): consists of a fuel injection mechanism having functions of controlling fuel injection timing, amount of fuel to be injected and injection pressure and a drive controlling circuit device, controlled by the electric control unit (ECU100) for injecting proper amount of fuel into the internal combustion engine in the proper timing;
At least one or both of the engine ignition device (109) and/or the fuel injection device (110) is driven by the boosted output electric energy of the direct current boosted boost circuit device (600);
The mentioned fuel injection device (110) includes being replaced by a carburetor;
And the emergency starting switching device (500) is installed,
--Emergency starting switching device (500): consists of three-terminal solid-state electronic switching devices or electromechanical switching devices or mechanical switching devices controlled manually or controlled by the electric control unit (ECU100), the common joint C is leaded to the positive terminal of the motor starting relay (102) and the starting switch (103), the joint A which is engaged in the normal status is leaded to the positive terminal of the starting battery (104), the joint B which is opened in the normal status and switched to the engaged status during emergency start is leaded to the positive terminal of the primary charging and discharging auxiliary power storage device (106), when the electric energy of the starting battery is insufficient, through operating the auxiliary switch device, the electric energy of the auxiliary battery can be served to drive the starting motor so as to start the engine;
--Direct current boosted boost circuit device (600): consists of solid-state electronic circuit elements or electromechanical circuit elements, driven by the electric energy of the secondary charging and discharging auxiliary power storage device (107) and/or the electric energy outputted by the regulating device (201), the electric control unit (ECU100) is controlled by an operation input device (OP100) thereby controlling the starting switch (103) to allow the relay (102) to be engaged, when the electric energy of the starting battery (104) is served to drive the starting motor (101), the direct current boosted boost circuit device (600) is also started for boosting voltage, so with the operation voltage being boosted, the starting capability of the engine ignition device (109) and/or the fuel injection device (110) is optimized for being in a booster operation status, the engine starting is therefore facilitated, and in the subsequent operation of engine, the direct current boosted boost circuit device (600) is kept in an electric energy supplying status with boosted voltage thereby facilitating the subsequent operation of engine and preventing from being affected by the voltage variation of the secondary charging and discharging auxiliary power storage device (107);
The output voltage boosted by the mentioned direct current boosted boost circuit device (600) is higher than the voltage of the input power source and is limited to be equal or lower than the highest allowable operation voltage of the engine ignition device (109) and/or the fuel injection device (110);
--Electric control unit (ECU100): consists of electromechanical circuit elements or solid-state electric circuit elements and/or chips and operation software, used for controlling the starting switch (103), and controlling the operation timing of the engine ignition device (109) and/or the fuel injection device (110) and/or the direct current boosted boost circuit device (600) according to the working angle of the operation cycle and the working status of the engine; the electric control unit (ECU100) can be replaced by a mechanical controlling structure and can be optionally installed;
--Operation input device (OP100): consists of a device or mechanism capable of converting into electric energy controlling signals for the operation of the engine set (100) through manual switch function or electric energy physical signal input; the operation input device (OP100) can be replaced by a mechanical controlling structure and can be optionally installed.

5. A combustion and emergency start controlling device having auxiliary power source and system thereof as claimed in claim 1, wherein it is further characteristics in that when being applied for manually starting engine and the starting motor and the starting battery are not installed, the electric energy generated by the generator (200) is transferred through the regulating device (201) to the direct current boosted boost circuit device (600), so at the staring stage with lower engine rotation speed and the voltage of the generator is insufficient, the operation voltage of the engine ignition device and/or the fuel injection device can be boosted by the direct current boosted boost circuit device (600) thereby obtaining a better starting operation status, and in the subsequent operation of engine, the direct current boosted boost circuit device (600) is kept in a voltage boosting status for facilitating the subsequent operation of engine, and the main constitution is that the generator windings of the generator (200) and the regulating device (201) are served to supply electric energy to the direct current boosted boost circuit device (600), so when the engine is manually started with lower engine rotation speed and the voltage of the generator (200) is relatively lower, the electric energy generated by the generator (200) can be boosted by the direct current boosted boost circuit device (600) thereby improving the operation of the engine ignition device (109) and/or the fuel injection device (110), and in the subsequent operation of engine, the direct current boosted boost circuit device (600) is kept in a voltage boosting status for facilitating the subsequent operation of engine;
The output voltage boosted by the mentioned direct current boosted boost circuit device (600) is limited to be equal or lower than the highest allowable operation voltage of the engine ignition device (109) and/or the fuel injection device (110);
--Engine ignition device (109): consists of electromechanical circuit elements and/or solid-state electronic circuit elements or the combination of the above, and used for providing ignition to the internal combustion engine for operating the engine;
--Fuel injection device (110): consists of a fuel injection mechanism having functions of controlling fuel injection timing, amount of fuel to be injected and injection pressure and a drive controlling circuit device, and used for injecting proper amount of fuel into the internal combustion engine in the proper timing;
At least one or both of the engine ignition device (109) and/or the fuel injection device (110) is driven by the boosted output electric energy of the direct current boosted boost circuit device (600);
The mentioned fuel injection device (110) includes being replaced by a carburetor;
--Direct current boosted boost circuit device (600): consists of solid-state electronic circuit elements or electromechanical circuit elements, driven by the electric energy outputted by the regulating device (201), when the engine is manually started, the direct current boosted boost circuit device (600) is also started for boosting voltage, so with the operation voltage being boosted, the starting capability of the engine ignition device (109) and/or the fuel injection device (110) is optimized for being in a booster operation status, the engine starting is therefore facilitated, and in the subsequent operation of engine, the direct current boosted boost circuit device (600) is kept in an electric energy supplying status with boosted voltage thereby facilitating the subsequent operation of engine;
The output voltage boosted by the mentioned direct current boosted boost circuit device (600) is higher than the voltage of the input power source and is limited to be equal or lower than the highest allowable operation voltage of the engine ignition device (109) and/or the fuel injection device (110);
--Electric control unit (ECU100): consists of electromechanical circuit elements or solid-state electric circuit elements and/or chips and operation software, after the engine is manually started, the electric control unit (ECU100) receives the electric energy outputted by the regulating device (201) for controlling the operation timing of the engine ignition device (109) and/or the fuel injection device (110) and/or the direct current boosted boost circuit device (600) according to the working angle of the operation cycle and the working status of the engine; the electric control unit (ECU100) can be replaced by a mechanical controlling structure and can be optionally installed;
--Operation input device (OP100): consists of a device or mechanism capable of converting into electric energy controlling signals for the operation of the engine set (100) through manual switch function or electric energy physical signal input; the operation input device (OP100) can be replaced by a mechanical controlling structure and can be optionally installed.

6. A combustion and emergency start controlling device having auxiliary power source and system thereof as claimed in any claim of claims 1, 2, 3 or 4, wherein the generator (200) can be the alternative current generator or the direct current generator, if the generator windings is not equipped with the reverse current preventing function, and/or the regulating device (201) is not equipped with the reverse current preventing function, diodes (1051) can be serially installed with a normal-polarity manner with respect to the current outputting direction for preventing reverse current;
If the generator (200) of the generator windings is equipped with the reverse current preventing function, or the regulating device (201) is equipped with the reverse current preventing function, the diodes (1051) are not necessary to be installed.

7. A combustion and emergency start controlling device having auxiliary power source and system thereof as claimed in any claim of claims 1, 2, 3 or 4, wherein the boosted voltage output terminal of the direct current boosted boost circuit device (600) is further connected in parallel with an energy storing and releasing device (700) thereby increasing the electricity supplying capability of the instant high power output of the direct current boosted boost circuit device (600), the energy storing and releasing device (700) is individually composed of rechargeable batteries or capacitors or super capacitors or installed in the direct current boosted boost circuit device (600).

8. A combustion and emergency start controlling device having auxiliary power source and system thereof as claimed in claim 5, wherein the boosted voltage output terminal of the direct current boosted boost circuit device (600) is further connected in parallel with an energy storing and releasing device (700) thereby increasing the electricity supplying capability of the instant high power output of the direct current boosted boost circuit device (600), the energy storing and releasing device (700) is individually composed of rechargeable batteries or capacitors or super capacitors or installed in the direct current boosted boost circuit device (600).

9. A combustion and emergency start controlling device having auxiliary power source and system thereof as claimed in any claim of claims 1, 2, 3 or 4, wherein the boosted voltage outputted by the direct current boosted boost circuit device (600) can be controlled through the electric control unit (ECU100), during the engine starting and the subsequent operation of engine, the value of boosted voltage outputted by the direct current boosted boost circuit device (600) is the same or randomly varied through being controlled by the electric control unit (ECU100).

10. A combustion and emergency start controlling device having auxiliary power source and system thereof as claimed in claim 5, wherein the boosted voltage outputted by the direct current boosted boost circuit device (600) can be controlled through the electric control unit (ECU100), during the engine starting and the subsequent operation of engine, the value of boosted voltage outputted by the direct current boosted boost circuit device (600) is the same or randomly varied through being controlled by the electric control unit (ECU100).

11. A combustion and emergency start controlling device having auxiliary power source and system thereof, wherein the certain component structures applicable therein includes the components being individually installed, or further including following characteristics: at least two or more than two of the direct current boosted boost circuit device (600), and/or the energy storing and releasing device (700), and/or the primary charging and discharging auxiliary power storage device (106), and/or the secondary charging and discharging auxiliary power storage device (107), and/or the emergency starting switching device (500), and/or the isolation diode (111), and/or the isolation diode (108), the diodes (1051), the electric control unit (ECU100) and the operation input device (OP100) are jointly structured as a compound component, or at least one of the mentioned components is jointly structured with at least one of the conventional engine starting and combustion related components such as the starting motor (101), the relay (102), the starting switch (103), the generator (200), the regulating device (201), the engine ignition device (109) and the fuel injection device (110) for forming as a compound component.
